# EUROPÄISCHE PATENTSCHRIFT

(11) **EP 2 606 563 B1**
(45) Veröffentlichungstag und Bekanntmachung des Hinweises auf die Patenterteilung: **06.08.2014**
(21) Anmeldenummer: 11767208.9
(22) Anmeldetag: 22.09.2011
(51) Int. Cl.: H02K 55/04, H02K 9/20

(54) **THERMOSYPHONKÜHLUNG EINES ROTORS FÜR EINE ELEKTRISCHE MASCHINE**
THERMOSYPHON COOLING OF A ROTOR FOR AN ELECTRIC MACHINE
REFROIDISSEMENT PAR THERMOSIPHON DE ROTOR POUR UN MOTEUR ÉLECTRIQUE

(30) Priorität: 27.09.2010 DE 102010041456
(43) Veröffentlichungstag der Anmeldung: 26.06.2013
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2011/066544
(87) Internationale Veröffentlichungsnummer: WO 2012/049002

(56) Entgegenhaltungen:
- DE-A1- 10 303 307
- US-A- 3 891 875
- US-A- 4 365 175

## Beschreibung

Die Erfindung betrifft einen Rotor für eine elektrische Maschine sowie eine entsprechende elektrische Maschine.

Aus dem Stand der Technik ist es bekannt, Rotoren mit supraleitenden Rotorwicklungen für elektrische Maschinen, wie z.B. Synchronmotoren und Synchrongeneratoren, einzusetzen. Vorzugsweise werden solche Rotoren in Kraftwerksgeneratoren zur elektrischen Stromerzeugung verwendet, wobei durch die rotierende supraleitende Wicklung des Rotors höhere Leistungsdichten, geringere Verluste und weitere Vorteile erreicht werden. Um in solchen Rotoren eine Supraleitung in der Rotorwicklung zu bewirken, sind diese Rotoren mit einem Kühlrohrsystem versehen, in dem kryogenes Kühlmittel, wie z.B. Helium, Wasserstoff, Neon oder Stickstoff, selbsttätig zirkuliert. Die Zirkulation des Kühlmittels wird bei der Rotation des Rotors durch die Zentrifugalkraft bewirkt.

In der Druckschrift DE 103 03 307 A1 ist ein Rotor mit supraleitender Rotorwicklung und einem Kühlsystem in der Form von Kühlrohrschleifen beschrieben, welche auf zwei radial gegenüberliegenden Seiten des Rotors vorgesehen sind. Die Kühlrohrschleifen sind dabei mit einem Kühlmittelreservoir verbunden. Im Rotationsbetrieb wird das Kühlmittel aus dem Reservoir in die Kühlrohrschleifen und von dort wieder zurück in das Reservoir transportiert.

Bei bekannten Rotoren mit supraleitender Wicklung und entsprechendem Kühlsystem erweist es sich als nachteilhaft, dass das Kühlmittel ohne Rotation des Rotors immer in die geodätisch tiefer liegenden Kühlrohre fließt und somit eine gleichmäßige Kühlung der Rotorwicklung nicht bei Stillstand des Rotors erreicht werden kann. Wird der Rotor z.B. in einem dem bestimmungsgemäßen Rotorbetrieb vorgeschalteten Abkühlprozess ohne Rotation abgekühlt, führt dies dazu, dass nur höchstens die Hälfte der Kühlrohre mit Kühlmittel durchsetzt wird, was zu unerwünschten thermisch induzierten Spannungen führen kann. Demzufolge muss auch außerhalb des Normaletriebs des Rotors sichergestellt werden, dass das Kühlmittel das gesamte Kühlrohrsystem durchfließt. Dies kann in herkömmlichen Rotoren nur durch eine kontinuierliche oder intervallweise Rotation des Rotors erreicht werden, was jedoch die Anbringung eines Antriebs für den Rotor erforderlich macht.

Aufgabe der Erfindung ist es, einen Rotor für eine elektrische Maschine zu schaffen, dessen supraleitende Rotorwicklung auch bei Stillstand des Rotors gleichmäßig gekühlt wird.

Diese Aufgabe wird durch den Rotor gemäß Patentanspruch 1 bzw. die elektrische Maschine gemäß Patentanspruch 14 gelöst. Weiterbildungen der Erfindung sind in den abhängigen Ansprüchen definiert.

Der erfindungsgemäße Rotor umfasst einen um eine Rotationsachse rotierbaren Rotorkörper mit einer supraleitenden Rotorwicklung, welche insbesondere aus Hoch-T_{c}-Supraleiter-Material besteht, und eine zur Kühlung der Rotorwicklung vorgesehene Kühlanordnung mit zumindest einem Paar von Kühlrohrschleifen, welche auf dem Rotorkörper im Wesentlichen radial gegenüberliegend angeordnet sind. Dabei wird ein kryogenes Kühlmittel (z.B. Neon, Wasserstoff, Helium oder Stickstoff) in den Kühlrohrschleifen bei der Rotation des Rotors um die Rotationsachse in axialer Richtung (d.h. in Richtung der Rotationsachse) von einem ersten axialen Rotorende zu einem zweiten, gegenüberliegenden axialen Rotorende und zurück transportiert. Der Begriff der Kühlrohrschleife ist dabei weit auszulegen und insbesondere kann eine Kühlrohrschleife gegebenenfalls nicht nur aus einer einzelnen Kühlleitung bestehen, sondern auch aus mehreren, parallel nebeneinander geführten Kühlleitungen.

Der erfindungsgemäße Rotor zeichnet sich dadurch aus, dass in der Kühlanordnung ein oder mehrere Verbindungsrohre vorgesehen sind, welche eine Kühlrohrschleife mit der anderen Kühlrohrschleife des zumindest einen Paars von Kühlrohrschleifen verbinden. Auf diese Weise wird ein direkter Kühlmittelaustausch zwischen den gegenüberliegenden Kühlrohrschleifen eines Paars von Kühlrohrschleifen ermöglicht, so dass Kühlmittel auch bei Stillstand des Rotors von der geodätisch tiefer liegenden Kühlrohrschleife zu der höher liegenden Kühlrohrschleife gelangen kann. Im Rahmen eines dem eigentlichen Betrieb des Rotors vorgeschalteten Abkühlprozesses wird dabei durch den noch warmen Rotor eine Verdampfung des Kühlmittels in der geodätisch tiefer liegenden Kühlrohrschleife bewirkt, wodurch flüssiges Kühlmittel nach Art einer Blasenpumpe über das oder die Verbindungsrohre in die geodätisch höher liegende Kühlrohrschleife gefördert wird, wodurch die Zirkulation des Kühlmittels zwischen den Kühlrohrschleifen bewirkt wird. Erfindungsgemäß kann somit auch bei Stillstand des Rotors eine gleichmäßige Kühlung der Rotorwicklung erreicht werden.

Bis auf das oder die vorgesehenen Verbindungsrohre kann der erfindungsgemäße Rotor in an sich bekannter Weise aufgebaut sein. Insbesondere kann der Rotor dem in der Druckschrift DE 103 03 307 A1 gezeigten Rotor entsprechen. Der gesamte Offenbarungsgehalt dieser Druckschrift wird durch Verweis zum Inhalt der vorliegenden Anmeldung gemacht.

In einer besonders bevorzugten Ausführungsform weist der Rotor eine zweipolige Rotorwicklung mit einem einzelnen Paar von Kühlrohrschleifen auf. Im Betrieb der elektrischen Maschine, bei dem der Rotor mit Gleichstrom versorgt wird, bildet sich dann ein Magnetfeld mit einem Nord- und einem Südpol aus. Gegebenenfalls ist es jedoch auch möglich, dass der Rotor eine Rotorwicklung mit mehreren magnetischen Polpaaren aufweist, wobei in diesem Fall die Anzahl an Paaren von Kühlrohrschleifen der Anzahl an Polpaaren entspricht.

In einer weiteren, besonders bevorzugten Ausführungsform des erfindungsgemäßen Rotors erfolgt die Zirkulation des Kühlmittels unter Verwendung eines Kühlmittelreservoirs, welches am ersten axialen Rotorende vorgesehen ist. Dieses Reservoir ist mit den entsprechenden Kühlrohrschleifen des oder der Paare von Kühlrohrschleifen verbunden.

In einer besonders bevorzugten Variante des erfindungsgemäßen Rotors ist zumindest ein Verbindungsrohr, welches die Kühlrohrschleifen miteinander verbindet, ein gerades Rohrstück, das sich radial von einer Kühlrohrschleife zur anderen Kühlrohrschleife des zumindest einen Paars von Kühlrohrschleifen erstreckt. Die Verwendung eines radialen Verbindungsrohrs hat den Vorteil, dass das Rohr im Rotationsbetrieb die auf die Kühlrohrschleifen wirkenden Zentrifugalkräfte sehr gut mechanisch abfangen kann und somit gegebenenfalls auf zusätzliche Halteeinrichtungen verzichten werden kann.

Anstatt oder zusätzlich zu geraden Rohrstücken können ein oder mehrere Verbindungsrohre gegebenenfalls auch gebogen ausgestaltet sein, insbesondere als im Wesentlichen halbkreisförmige Rohrstücke. Dabei entspricht der Durchmesser dieser Rohrstücke vorzugsweise dem Abstand zwischen zwei gegenüberliegenden Kühlrohrschleifen. Zur effizienten Verteilung von Kühlmittel zwischen den Kühlrohrschleifen sind für ein Paar von Kühlrohrschleifen vorzugsweise zwei gebogene Rohrstücke als Verbindungsrohre vorgesehen, insbesondere zwei im Wesentlichen halbkreisförmige Rohrstücke, welche zusammen einen Vollkreis bilden.

In einer weiteren, besonders bevorzugten Ausführungsform sind das oder die Verbindungsrohre an dem zweiten axialen Rotorende vorgesehen. Diese Variante hat den Vorteil, dass die Verbindungsrohre an der Außenseite des Rotorkörpers vorbeigeführt werden können und somit nicht in den Rotorkörper integriert werden müssen, was die Herstellung des Rotors vereinfacht.

In einer weiteren, besonders bevorzugten Ausführungsform umfasst eine Kühlrohrschleife eine und gegebenenfalls auch mehrere U-Formen, wobei Kühlmittel bei Rotation des Rotors entlang eines Schenkels der U-Form von dem ersten axialen Rotorende zu dem zweiten axialen Rotorende transportiert wird und von dort über ein Zwischenstück in den anderen Schenkel der U-Form gelangt, in dem es zu dem ersten axialen Rotorende zurücktransportiert wird. Vorzugsweise verbindet dabei zumindest ein Verbindungsrohr die Zwischenstücke der U-Formen eines Paars von gegenüberliegenden Kühlrohrschleifen. Da dieses Zwischenstück, welches die Wendestelle des Kühlmittels darstellt, aus fertigungstechnischen Gründen bevorzugt außerhalb der Rotorwicklung bzw. des Rotorkörpers liegt, wird hierdurch eine einfache Verbindung der Kühlrohrschleifen geschaffen.

In einer weiteren, besonders bevorzugten Ausführungsform sind an zumindest einer Kühlrohrschleife ein oder mehrere Mittel zur Erwärmung von Kühlmittel vorgesehen. Diese Variante der Erfindung hat den Vorteil, dass auch dann, wenn die Rotorwicklung vollumfänglich auf die zur Supraleitung erforderliche Temperatur abgekühlt ist, eine Zirkulation des Kühlmittels bei Stillstand des Rotors erreicht wird. Dies geschieht dadurch, dass durch die Mittel zur Erwärmung des Kühlmittels eine Verdampfung des Kühlmittels hervorgerufen wird, so dass wiederum der oben beschriebene Effekt einer Blasenpumpe erreicht wird. Das oder die Mittel zur Erwärmung von Kühlmittel können beispielsweise als ein oder mehrere zuschaltbare Heizelemente ausgestaltet sein, so dass aktiv bedarfsweise die Verdampfung des Kühlmittels und damit der Effekt einer Blasenpumpe hervorgerufen werden kann.

Da die Rotorwicklung und die Kühlrohrschleifen in der Regel thermisch gegenüber der Umgebung isoliert sind, können das oder die Mittel zur Erwärmung von Kühlmittel gegebenenfalls auch ein oder mehrere Wärmelecks in der entsprechenden thermischen Isolierung umfassen. Die thermische Isolierung wird dabei vorzugsweise durch einen sog. Kryostaten gebildet, der die Kühlrohrschleifen sowie die Rotorwicklung enthält.

In einer weiteren Ausführungsform des erfindungsgemäßen Rotors sind für ein Paar von Kühlrohrschleifen ausschließlich an einer Kühlrohrschleife des Paars ein oder mehrere Mittel zur Erwärmung von Kühlmittel vorgesehen. Diese Anordnung kommt somit mit einer geringen Anzahl von Mitteln zur Erwärmung von Kühlmittel aus. Es ist dabei lediglich darauf zu achten, dass bei Stillstand des bereits abgekühlten Rotors eine Zirkulation von Kühlmittel nur dann bewirkt wird, wenn die Kühlrohrschleife mit dem oder den Mitteln zur Erwärmung von Kühlmittel geodätisch tiefer liegt als die andere Kühlrohrschleife ohne solche Mittel.

Neben dem oben beschriebenen Rotor umfasst die Erfindung ferner eine elektrische Maschine, welche insbesondere als Kraftwerksgenerator zur Erzeugung von elektrischer Energie ausgestaltet ist, wobei die elektrische Maschine den erfindungsgemäßen Rotor bzw. eine bevorzugte Ausführungsform des erfindungsgemäßen Rotors umfasst.

Ausführungsbeispiele der Erfindung werden nachfolgend anhand der beigefügten Figuren detailliert beschrieben.

Es zeigen:
- Fig. 1 und Fig. 2: einen Rotor einer elektrischen Maschine gemäß dem Stand der Technik in verschiedenen Betriebssituationen; und
- Fig. 3 bis Fig. 5: Ausführungsformen eines erfindungsgemäßen Rotors in verschiedenen Betriebssituationen.

Die im Folgenden beschriebenen Rotoren werden in großen supraleitenden Generatoren, wie z.B. Kraftwerksgeneratoren, mit Leistungen zwischen 100 und 1000 MW eingesetzt. Der Rotor wird dabei durch Gleichstrom gespeist und umfasst eine supraleitende Rotorwicklung, welche bei Stromfluss ein oder mehrere magnetische Polpaare erzeugt. Der Rotor ist dabei in einem entsprechenden (nicht gezeigten) Stator mit Statorwicklung angeordnet, wobei die Statorwicklung aus einem herkömmlichen Metallmaterial und nicht aus einem Supraleiter besteht. Im Folgenden werden zweipolige Rotoren betrachtet, deren Rotorwicklung zwei magnetische Pole bildet.

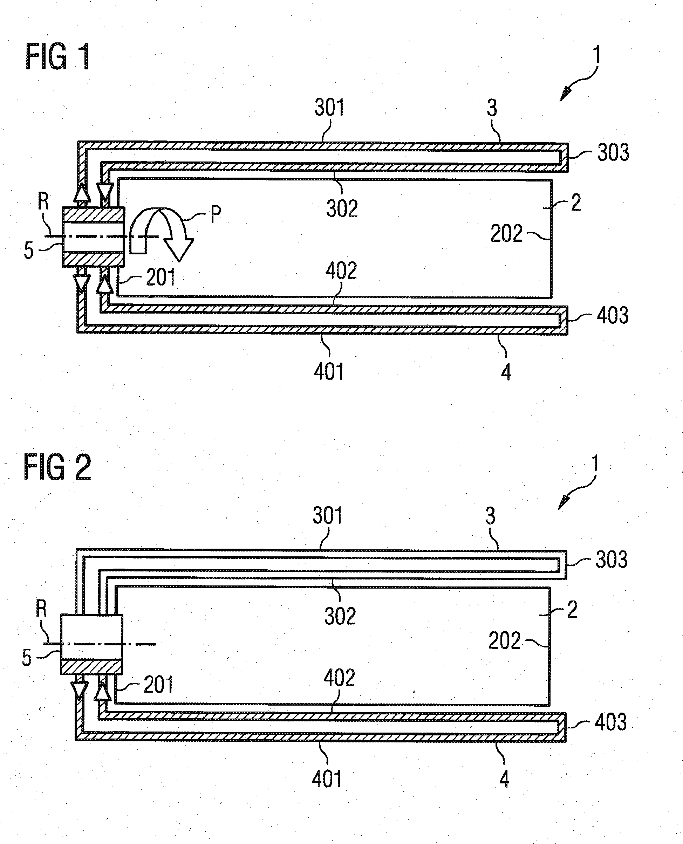

Fig. 1 zeigt in schematischer Darstellung einen zweipoligen Rotor gemäß dem Stand der Technik. Dieser Rotor kann analog zu dem in der Druckschrift DE 103 03 307 A1 beschriebenen Rotor aufgebaut sein. Der Rotor 1 umfasst einen lediglich schematisch dargestellten zylindrischen Rotorkörper 2, der sich im Betrieb um die dargestellte Rotationsachse R dreht. Die aus Übersichtlichkeitsgründen nicht gezeigte supraleitende Rotorwicklung erstreckt sich in der Rotorposition der Fig. 1 ausgehend von einem ersten axialen Ende 201 des Rotorkörpers entlang der Oberseite des Rotorkörpers bis zu einem zweiten axialen Ende 201 des Rotorkörpers und von dort in radialer Richtung nach unten und anschließend entlang der Unterseite des Rotorkörpers von dem zweiten axialen Ende 202 zurück bis zum ersten axialen Ende 201 des Rotorkörpers.

Um Supraleitung in der Rotorwicklung zu erreichen, muss diese in geeigneter Weise mit einem kryogenen Kühlmittel, wie z.B. Neon, gekühlt werden. Hierzu wird ein Kühlkreislauf verwendet, der ein Kühlreservoir 5 sowie zwei Kühlrohrschleifen 3 und 4 umfasst, welche auch als Thermosyphonschleifen bezeichnet werden. Die Kühlrohrschleifen sind dabei benachbart zu den Leitern der Rotorwicklung angeordnet. Die Kühlrohrschleife und die Rotorwicklung sind zur thermischen Isolation gegenüber der Umgebung in einem (nicht gezeigten) Kryostaten angeordnet, der analog zu dem Kryostaten der Druckschrift DE 103 03 307 A1 aufgebaut sein kann. In Fig. 1 sowie in allen nachfolgenden Figuren ist das Kühlmittel in der flüssigen Phase innerhalb des Kühlkreislaufs schraffiert angedeutet, wohingegen Kühlmittel in gasförmiger Phase durch weiße Bereiche wiedergegeben ist.

Die Kühlrohrschleifen 3 und 4 der Fig. 1 sind U-förmig ausgestaltet und umfassen zwei, sich in axialer Richtung des Rotors erstreckende Schenkel 301 und 302 bzw. 401 und 402, wobei die beiden Schenkel der jeweiligen Kühlrohrschleife über ein Zwischenrohr 303 bzw. 403 miteinander verbunden sind. Die Schenkel und das Zwischenrohr sind dabei aus Darstellungszwecken in der Blattebene angeordnet.

Fig. 1 zeigt den Betrieb des Rotors 1 mit Rotation, wobei die Rotation durch den Pfeil P angedeutet ist. Aufgrund der durch die Rotation verursachten Zentrifugalkraft wird das Kühlmittel aus dem Reservoir 5 in die entsprechenden Schenkel der beiden Kühlrohrschleifen 3 bzw. 4 gedrückt. Hierdurch wird eine Zirkulation des Kühlmittels vom Reservoir in den Schenkel 301 und von dort über den Schenkel 302 zurück ins Reservoir und analog vom Reservoir 5 in den Schenkel 401 und von dort über den Schenkel 402 zurück ins Reservoir bewirkt. Aufgrund dieser Zirkulation wird eine geeignete Kühlung der Rotorwicklung bewirkt. Die Zirkulation des Kühlmittels ist in Fig. 1 und allen nachfolgenden Figuren durch Dreiecke auf den Kühlrohren angedeutet.

Vor der Inbetriebnahme der elektrischen Maschine gemäß Fig. 1 müssen der Rotor und insbesondere dessen Rotorwicklung in einem länger andauernden Abkühlprozess durch das Kühlmittel im Thermosyphonsystem zunächst Unter die Sprungtemperatur des Supraleiters abgekühlt werden. Dabei besteht das Problem, dass der Rotor in der Regel nicht rotiert und somit keine Zentrifugalkraft auf das Kühlmittel wirkt. Folglich kann das Kühlmittel nur zu geodätisch tiefer gelegenen Punkten strömen, so dass nur die Hälfe der Rotorwicklung gekühlt wird. Ein solches Szenario ist in Fig. 2 wiedergegeben. Man erkennt, dess in Abwesenheit der Zentrifugalkraft nunmehr nur noch eine Zirkulation des Kühlmittels in der unteren Kühlrohrschleife 4 bewirkt wird. Die Zirkulation kommt dabei dadurch zustande, dass sich das Kühlmittel im Abkühlprozess aufgrund des noch warmen Rotors erwärmt und dadurch verdampft, wodurch ein Fluss des Kühlmittels in den Rohren verursacht wird. Aktuell wird vorgeschlagen, im Rahmen des Abkühlprozesses den Rotor entweder kontinuierlich oder in hinreichend kurzen Intervallen weiter zu drehen, wodurch die beiden Kühlrohrschleifen gleichmäßig gekühlt werden. Dies hat den Nachteil, dass im Rahmen des Abkühlprozesses ein Antrieb zur Drehung des Rotors erforderlich ist, was mit einem hohen Aufwand verbunden ist.

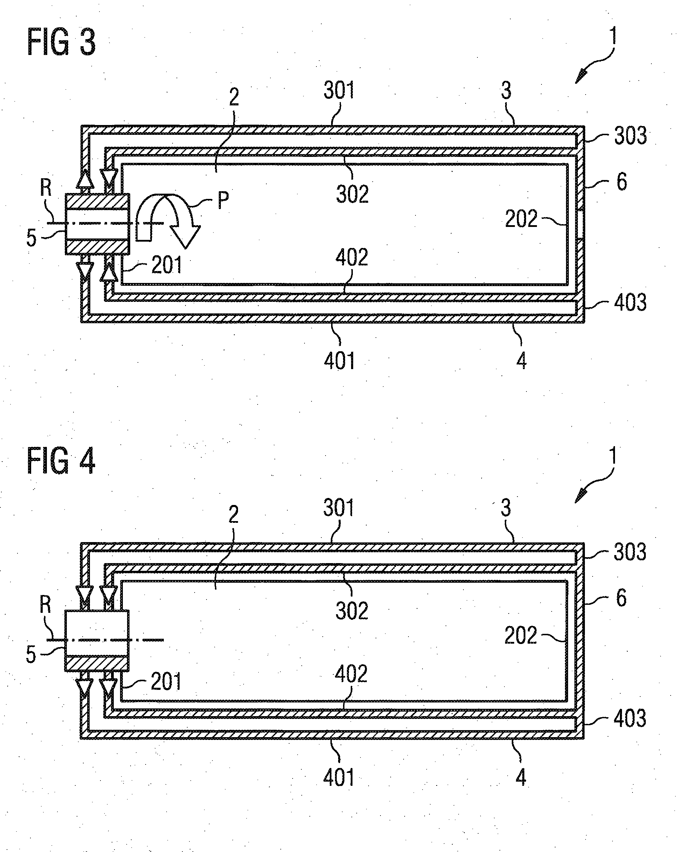

Fig. 3 zeigt eine Ausführungsform eines erfindungsgemäßen Rotors, mit dem die obigen Nachteile behoben werden. Der Rotor ist dabei analog zu Fig. 1 und Fig. 2 aufgebaut, so dass die gleichen Bauteile bzw. einander entsprechende Bauteile mit den gleichen Bezugszeichen bezeichnet sind und nicht nochmals beschrieben werden. Im Unterschied zu dem Rotor aus Fig. 1 bzw. Fig. 2 ist nunmehr in dem Thermosyphonsystem eine weitere Kühlleitung in der Form eines radialen Verbindungsrohrs 6 vorgesehen, welche die obere Kühlrohrschleife 3 mit der unteren Kühlrohrschleife 4 am axialen Ende 202 des Rotorkörpers 2 verbindet. Das Verbindungsrohr bildet dabei ein T-Stück mit den entsprechenden Zwischenrohren 303 und 403. Anstatt eines radialen Verbindungsrohrs können auch ein oder mehrere Verbindungsrohre mit anderen Formen, wie z.B. gebogene Verbindungsrohre und insbesondere zwei halbkreisförmige Verbindungsrohre, zum Verbinden der Kühlrohrschleifen eingesetzt werden. Fig. 3 zeigt den bestimmungsgemäßen Betrieb des Rotors mit Rotation. Man erkennt, dass das Verbindungsrohr 6 diesen Betrieb nicht beeinträchtigt. Insbesondere wird durch die Zentrifugalkraft wiederum eine Zirkulation des Kühlmittels in den beiden Kühlrohrschleifen 3 und 4 bewirkt. Dabei befindet sich Kühlmittel in der flüssigen und gasförmigen Phase in dem Verbindungsrohr 6.

Fig. 4 zeigt nunmehr den Betrieb des Rotors der Fig. 3 ohne Rotation während der Abkühlphase vor Inbetriebnahme der elektrischen Maschine. Der Rotor steht dabei still. Nichtsdestotrotz erfolgt eine Zirkulation des Kühlmittels derart, dass Kühlmittel aus dem Reservoir 5 in die unteren Schenkel 401 und 402 der Kühlrohrschleife 4 strömt und von dort über das Verbindungsrohr 6 in die Schenkel 301 und 302 der oberen Kühlrohrschleife 3 und somit zurück in das Kühlmittelreservoir 5 gelangt. Diese Zirkulation entsteht dadurch, dass sich das in die Kühlrohre 401 und 402 strömende Kühlmittel aufgrund des noch warmen Rotors erwärmt und damit verdampft. Die verdampfende Flüssigkeit wird dabei in dem Rohr 6 durch das bereits verdampfte Kühlmittel mitgerissen und gelangt auf diese Weise problemlos auch zu den geodätisch höher gelegenen Rohrabschnitten 301 und 302. Dieses Verhalten ist auch unter dem Begriff der "Blasenpumpe" bekannt.

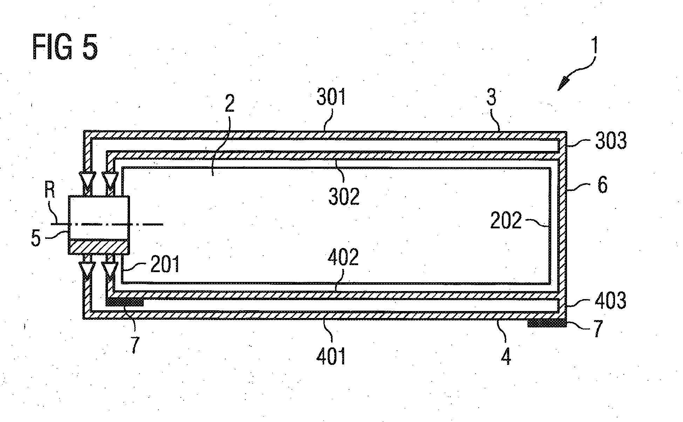

Der Pumpeffekt der Blasenpumpe funktioniert im Rahmen des Abkühlprozesses aufgrund des warmen Rotors von selbst. Ist der Rotor vollständig abgekühlt, tritt der Effekt der Blasenpumpe nicht mehr auf. Um dennoch auch bei Stillstandphasen des Rotors während des Betriebs eine gleichmäßige Durchströmung der Kühlrohrschleifen mit Kühlmittel zu erreichen, wird in einer abgewandelten Ausführungsform eines erfindungsgemäßen Rotors eine Heizeinrichtung verwendet. Diese abgewandelte Ausführungsform ist schematisch in Fig. 5 gezeigt.

Der Aufbau des Rotors gemäß Fig. 5 entspricht dabei im Wesentlichen dem Aufbau des Rotors aus Fig. 3 und Fig. 4. Zusätzlich sind jedoch zwei zuschaltbare elektrische Heizelemente 7 an den Kühlrohren 401 und 402 der unteren Kühlrohrschleife 4 vorgesehen. Eines der Heizelemente befindet sich dabei am ersten axialen Ende 201 des Rotorkörpers und das andere Heizelement am zweiten axialen Ende 202 des Rotorkörpers. Kommt es zu einem Stillstand des Rotors, werden die Heizelemente in Betrieb gekommen, wodurch eine Verdampfung des Kühlmittels in den Kühlrohren 401 und 402 bewirkt wird, was wiederum zu dem oben beschriebenen Blasenpumpeneffekt führt, so dass gleichmäßig Kühlmittel durch die untere Kühlröhrschleife 4 und die obere Kühlrohrschleife 3 zirkuliert. Wird die Rotation des Rotors wieder in Betrieb genommen, werden die Heizelemente abgeschaltet, da dann die Zirkulation des Kühlmittels durch die Zentrifugalkraft der Rotation bewirkt wird.

Die im Vorangegangenen beschriebenen Ausführungsformen des erfindungsgemäßen Rotors weisen eine Reihe von Vorteilen auf. Durch die Anbringung von einer Verbindungsleitung zwischen den Kühlrohrschleifen des Rotors wird auf einfache Weise das Thermosyphonsystem als Blasenpumpe betrieben, so dass beide Kühlrohrschleifen des Rotors auch ohne Rotation gleichmäßig mit Kühlmittel durchsetzt werden. Eine Rotation des Rotors während dessen Abkühlphase ist dabei nicht mehr erforderlich. Hierdurch wird die Inbetriebsetzung des Rotors erheblich erleichtert. Darüber hinaus ist die Abkühlgeschwindigkeit gegenüber einer Abkühlung, bei der sich der Rotor kontinuierlich bzw. in Intervallen dreht, um ungefähr den Faktor 2 höher, da doppelt so viele Thermosyphonschleifen aktiv sind. Durch die Verbindung der gegenüberliegenden Kühlrohrschleifen mit einem Verbindungsrohr ergibt sich der weitere Vorteil, dass nicht nur die Funktion des Thermosyphonsystems als Blasenpumpe ermöglicht wird, sondern durch das Verbindungsrohr auch die bei der Rotation des Rotors auftretenden Zentrifugalkräfte auf die in diesem Bereich außerhalb der Wicklung angeordneten Rotorabschnitte abgefangen werden.

## Patentansprüche

1. Rotor für eine elektrische Maschine, umfassend einen um eine Rotationsachse (R) rotierbaren Rotorkörper (2) mit einer supraleitenden Rotorwicklung und eine zur Kühlung der Rotorwicklung (3, 4) vorgesehene Kühlanordnung mit zumindest einem Paar von Kühlrohrschleifen (3, 4), welche auf dem Rotorkörper (2) radial gegenüberliegend angeordnet sind, wobei ein kryogenes Kühlmittel in den Kühlrohrschleifen (3, 4) bei Rotation des Rotors (2) um die Rotationsachse (R) in axialer Richtung von einem ersten axialen Rotorende (201) zu einem zweiten, gegenüberliegenden axialen Rotorende (2) und zurück transportiert wird, **dadurch gekennzeichnet, dass** in der Kühlanordnung ein oder mehrere Verbindungsrohre (6) vorgesehen sind, welche eine Kühlrohrschleife (3) mit der anderen Kühlrohrschleife (4) des zumindest einen Paars von Kühlrohrschleifen (3, 4) verbinden.

2. Rotor nach Anspruch 1, **dadurch gekennzeichnet, dass** der Rotor (1) eine zweipoligen Rotorwicklung mit einem Paar von Kühlrohrschleifen (3, 4) umfasst oder dass der Rotor eine Rotorwicklung mit mehreren Polpaaren und eine der Anzahl an Polpaaren entsprechende Anzahl an Paaren von Kühlrohrschleifen (3, 4) umfasst.

3. Rotor nach Anspruch 1 oder 2, **dadurch gekennzeichnet, dass** am ersten axialen Rotorende (201) ein Kühlmittelreservoir (5) vorgesehen ist, welches mit den Kühlrohrschleifen (3, 4) verbunden ist.

4. Rotor nach einem der vorhergehenden Ansprüche, **dadurch gekennzeichnet, dass** zumindest ein Verbindungsrohr (6) ein gerades Rohrstück ist, dass sich radial von einer Kühlrohrschleife (3) zur anderen Kühlrohrschleife (4) des zumindest einem Paars von Kühlrohrschleifen (3, 4) erstreckt.

5. Rotor nach einem der vorhergehenden Ansprüche, **dadurch gekennzeichnet, dass** zumindest ein Verbindungsrohr (6) ein gebogenes Rohrstück ist, insbesondere ein im Wesentlichen halbkreisförmiges Rohrstück.

6. Rotor nach Anspruch 5, **dadurch gekennzeichnet, dass** für ein Paar von Kühlrohrschleifen (3, 4) zwei gebogene Rohrstücke als Verbindungsrohre (6) vorgesehen sind, insbesondere zwei halbkreisförmige Rohrstücke (6), welche zusammen einen Vollkreis bilden.

7. Rotor nach einem der vorhergehenden Ansprüche, **dadurch gekennzeichnet, dass** das oder die Verbindungsrohre an dem zweiten axialen Rotorende (202) vorgesehen sind.

8. Rotor nach einem der vorhergehenden Ansprüche, **dadurch gekennzeichnet, dass** eine Kühlrohrschleife (3, 4) eine U-Form umfasst, wobei Kühlmittel bei Rotation des Rotors (1) um die Rotationsachse (R) entlang eines Schenkels (301, 401) der U-Form von dem ersten axialen Rotorende (201) zu dem zweiten axialen Rotorende (202) transportiert wird und von dort über ein Zwischenstück (303, 403) in den anderen Schenkel (302, 402) der U-Form gelangt, in dem es zu dem ersten axialen Rotorende (201) zurücktransportiert wird.

9. Rotor nach Anspruch 8, **dadurch gekennzeichnet, dass** zumindest ein Verbindungsrohr (6) die Zwischenstücke (303, 403) der U-Formen eines Paars von gegenüberliegenden Kühlröhrschleifen (3, 4) verbindet.

10. Rotor nach einem der vorhergehende Ansprüche, **dadurch gekennzeichnet, dass** an zumindest einer Kühlrohrschleife (3, 4) ein oder mehrere Mittel zur Erwärmung von Kühlmittel vorgesehen sind.

11. Rotor nach Anspruch 10, **dadurch gekennzeichnet, dass** das oder die Mittel zur Erwärmung von Kühlmittel ein oder mehrere Heizelemente (7) umfassen.

12. Rotor nach Anspruch 10 oder 11, **dadurch gekennzeichnet, dass** das oder die Mittel zur Erwärmung von Kühlmittel ein oder mehrere Wärmelecks in einer thermischen Isolierung umfassen.

13. Rotor einem der Ansprüche 10 bis 12, **dadurch gekennzeichnet, dass** für ein Paar von Kühlrohrschleifen (3, 4) ausschließlich an einer Kühlrohrschleife (3, 4) des Paars ein oder mehrere Mittel zur Erwärmung von Kühlmittel vorgesehen sind.

14. Elektrische Maschine, **dadurch gekennzeichnet, dass** die elektrische Maschine einen Rotor (1) nach einem der Ansprüche 1 bis 13 umfasst.

## Claims

1. Rotor for an electric machine, comprising a rotor body (2) that is rotatable about an axis of rotation (R), said body having a superconducting rotor winding, and a cooling arrangement provided for cooling the rotor winding (3, 4), said arrangement having at least one pair of cooling tube loops (3, 4) which are disposed on the rotor body (2) in a radially opposite manner, wherein during rotation of the rotor (2) about the axis of rotation (R) a cryogenic coolant is conveyed in the cooling tube loops (3, 4) in the axial direction from a first axial rotor end (201) to a second, opposite axial rotor end (202) and back, **characterised in that** in the cooling arrangement one or more connecting tubes (6) are provided which connect one cooling tube loop (3) to the other cooling tube loop (4) of the at least one pair of cooling tube loops (3, 4).

2. Rotor according to claim 1, **characterised in that** the rotor (1) comprises a two-pole rotor winding with one pair of cooling tube loops (3, 4) or that the rotor comprises a rotor winding having a plurality of pole pairs and a number of pairs of cooling tube loops (3, 4) corresponding to the number of pole pairs.

3. Rotor according to claim 1 or 2, **characterised in that**, at the first axial rotor end (201), a coolant reservoir (5) is provided which is connected to the cooling tube loops (3, 4).

4. Rotor according to one of the preceding claims, **characterised in that** at least one connecting tube (6) is a straight tube section extending radially from one cooling tube loop (3) to the other cooling tube loop (4) of the at least one pair of cooling tube loops (3, 4).

5. Rotor according to one of the preceding claims, **characterised in that** at least one connecting tube (6) is a curved tube section, in particular a substantially semicircular tube section.

6. Rotor according to claim 5, **characterised in that** for one pair of cooling tube loops (3, 4) two curved tube sections, in particular two semicircular tube sections (6), which together form a complete circle, are provided as connecting tubes (6).

7. Rotor according to one of the preceding claims, **characterised in that** the connecting tube or tubes are provided at the second axial rotor end (202).

8. Rotor according to one of the preceding claims, **characterised in that** a cooling tube loop (3, 4) is U-shaped, wherein, during rotation of the rotor (1) about the axis of rotation (R), coolant is conveyed along one leg (301, 401) of the U shape from the first axial rotor end (201) to the second axial rotor end (202) and from there via an intermediate section (303, 403) into the other leg (302, 402) of the U shape in which it is returned to the first axial rotor end (201).

9. Rotor according to claim 8, **characterised in that** at least one connecting tube (6) connects the intermediate sections (303, 403) of the U shapes of a pair of opposite cooling tube loops (3, 4).

10. Rotor according to one of the preceding claims, **characterised in that** one or more coolant heating means are provided on at least one cooling tube loop (3, 4).

11. Rotor according to claim 10, **characterised in that** the one or more coolant heating means comprise one or more heating elements (7).

12. Rotor according to claim 10 or 11, **characterised in that** the one or more coolant heating means comprise one or more heat leaks in a thermal insulation.

13. Rotor according to one of claims 10 to 12, **characterised in that** for one pair of cooling tube loops (3, 4) one or more coolant heating means are provided only on one cooling tube loop (3, 4) of the pair.

14. Electric machine, **characterised in that** the electric machine comprises a rotor (1) according to one of claims 1 to 13.

## Revendications

1. Rotor pour une machine électrique, comprenant un corps ( 2 ) rotorique pouvant tourner autour d'un axe ( R ) de rotation et ayant un enroulement rotorique supraconducteur et un agencement de refroidissement prévu pour refroidir l'enroulement ( 3, 4 ) rotorique et ayant au moins une paire de boucles ( 3, 4 ) tubulaires de refroidissement, qui sont disposées en opposition radialement sur le corps ( 2 ) rotorique, un fluide cryogène de refroidissement étant transporté dans les boucles ( 3, 4 ) rotoriques de refroidissement, lors de la rotation du rotor ( 2 ) autour de l'axe de rotation, dans la direction axiale d'une première extrémité ( 201 ) axiale du rotor à une deuxième extrémité ( 2 ) axiale opposée du rotor et en revenant, **caractérisé en ce qu'**il est prévu dans l'agencement de refroidissement un ou plusieurs tubes ( 6 ) de liaison, qui mettent une boucle ( 3 ) tubulaire de refroidissement en communication avec l'autre boucle ( 4 ) tubulaire de refroidissement de la au moins une paire de boucles ( 3, 4 ) tubulaires de refroidissement.

2. Rotor suivant la revendication 1, **caractérisé en ce que** le rotor ( 1 ) comprend un enroulement rotorique bipolaire, ayant une paire de boucles ( 3, 4 ) tubulaires de refroidissement ou en ce que le rotor comprend un enroulement rotorique ayant plusieurs paires de pôles et un nombre de paires de boucles ( 3, 4 ) tubulaires de refroidissement correspondant au nombre de paires de pôles.

3. Rotor suivant la revendication 1 ou 2, **caractérisé en ce qu'**à la première extrémité ( 201 ) axiale du rotor est prévu un réservoir ( 5 ) de fluide de refroidissement, qui communique avec les boucles ( 3, 4 ) tubulaires de refroidissement.

4. Rotor suivant l'une des revendications précédentes, **caractérisé en ce qu'**au moins un tube ( 6 ) de liaison est un tronçon de tube qui s'étend radialement d'une boucle ( 3 ) tubulaire de refroidissement à l'autre boucle ( 4 ) tubulaire de refroidissement de la au moins une paire de boucles ( 3, 4 ) tubulaires de refroidissement.

5. Rotor suivant l'une des revendications précédentes, **caractérisé en ce qu'**au moins un tube ( 6 ) de liaison est une pièce tubulaire courbée, notamment une pièce tubulaire sensiblement hémicirculaire.

6. Rotor suivant la revendication 5, **caractérisé en ce que**, pour une paire de boucles ( 3, 4 ) tubulaires de refroidissement, sont prévues comme tube ( 6 ) de liaison deux pièces tubulaires courbées, notamment deux pièces ( 6 ) tubulaires hémicirculaires qui forment ensemble un cercle complet.

7. Rotor suivant l'une des revendications précédentes, **caractérisé en ce que** le ou les tubes de liaison sont prévus à la deuxième extrémité ( 202 ) axiale du rotor.

8. Rotor suivant l'une des revendications précédentes, **caractérisé en ce qu'**une boucle ( 3, 4 ) tubulaire de refroidissement comprend une forme en U, du fluide de refroidissement étant, lors de la rotation du rotor ( 1 ) autour de l'axe R de rotation, transporté le long d'une branche ( 301, 401 ) de la forme en U de la première extrémité ( 201 ) axiale du rotor à la deuxième extrémité ( 202 ) axiale du rotor et arrivant de là par une pièce ( 303, 403 ) intermédiaire dans l'autre branche ( 302, 402 ) de la forme en U où il est retourné à la première extrémité ( 201 ) axiale du rotor.

9. Rotor suivant la revendication 8, **caractérisé en ce qu'**au moins un tube ( 6 ) de liaison relie les pièces ( 303, 403 ) intermédiaires des formes en U d'une paire de boucles ( 3, 4 ) tubulaires de refroidissement opposées.

10. Rotor suivant l'une des revendications précédentes, **caractérisé en ce qu'**un ou plusieurs moyens de réchauffement du fluide de refroidissement sont prévus sur au moins l'une des boucles ( 3, 4 ) tubulaires de refroidissement.

11. Rotor suivant la revendication 10, **caractérisé en ce que** le ou les moyens de réchauffement de fluide de refroidissement comprennent un élément ( 7 ) de chauffage ou plusieurs éléments ( 7 ) de chauffage.

12. Rotor suivant la revendication 10 ou 11, **caractérisé en ce que** le ou les moyens de réchauffement de fluide de refroidissement comprennent une fuite de chaleur ou plusieurs fuites de chaleur dans un isolant thermique.

13. Rotor suivant l'une des revendications 10 à 12, **caractérisé en ce que**, pour une paire de boucles ( 3, 4 ) tubulaires de refroidissement, il est prévu, exclusivement sur une boucle ( 3, 4 ) tubulaire de refroidissement de la paire, un moyen ou plusieurs moyens de fluide de refroidissement.

14. Machine électrique, **caractérisée en ce que** la machine électrique comprend un rotor ( 1 ) suivant l'une des revendications 1 à 13.
